(19) Europäisches Patentamt
European Patent Office
Office européen des brevets

(11) Veröffentlichungsnummer: **0 224 660**
**B1**

(12) # EUROPÄISCHE PATENTSCHRIFT

(45) Veröffentlichungstag der Patentschrift: **23.11.89**

(51) Int. Cl.⁴: **H02K 49/04**

(21) Anmeldenummer: **86112240.6**

(22) Anmeldetag: **04.09.86**

(54) **Schaltbares Permanentmagnetsystem, insbesondere für eine Fahrzeugbremse.**

(30) Priorität: **08.11.85 CH 4815/85**

(43) Veröffentlichungstag der Anmeldung: **10.06.87 Patentblatt 87/24**

(45) Bekanntmachung des Hinweises auf die Patenterteilung: **23.11.89 Patentblatt 89/47**

(84) Benannte Vertragsstaaten: **AT BE CH DE FR GB IT LI NL SE**

(56) Entgegenhaltungen:
**DE-A-2 541 694**
**FR-A-1 134 358**
**GB-A-2 057 610**
**US-A-3 889 140**

(73) Patentinhaber: **Werkzeugmaschinenfabrik Oerlikon-Bührle AG, Birchstrasse 155, CH-8050 Zürich(CH)**

(72) Erfinder: **Mächler, Georg, Chilenaustrasse 23, CH-8108 Dällikon(CH)**

EP 0 224 660 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein schaltbares Permanentmagnetsystem, insbesondere für eine Fahrzeugbremse, mit Polstücken wechselnder Polarität, an denen feststehende und verdrehbare Permanentmagnete angrenzen, wobei feststehende Permanentmagnete an einer Seitenfläche der Polstücke anliegen und die verdrehbaren Permanentmagnete mit segmentförmigen Polschuhen versehen sind, welche in entsprechende Aussparungen der Polstücke eingreifen.

Vorzugsweise finden derartige Permanentmagnetsysteme Verwendung bei Kraftfahrzeugen als Wirbelstrombremse, siehe beispielsweise EP-A- 0 084 140. Solche Wirbelstrombremsen weisen aber für eine seriemässige Verwendung in Fahrzeugen zu grosse Abmessungen und ein zu hohes Gewicht bezogen auf eine vorgegebene Bremsleistung auf.

Die Erfindung, gemäss dem Kennzeichen des Anspruchs 1, löst die Aufgabe, ein schaltbares Permanentmagnetsystem zu schaffen, das insbesondere die Herstellung von leistungsstärkeren Wirbelstrombremsen ermöglicht.

Die durch die Erfindung erreichten Vorteile sind im wesentlichen darin zu sehen, dass nur jeder zweite mittlere Magnet verdrehbar auszubilden ist. Dadurch wird die Anzahl der Luftspalte insgesamt reduziert. Weiter erfolgt eine Reduktion der für die Verdrehung der Drehmagnete benötigten mechanischen Teile. Die Verminderung der Anzahl Drehmagnete gestattet eine Vergrösserung des Magnetvolumens insgesamt und damit eine Drehmomenterhöhung sowie eine Gewichtsreduktion. Weitere Vorteile ergeben sich durch die Eliminierung der inneren feststehenden Permanentmagnete und der inneren Rückschlussteile sowie durch eine Vergrösserung der mittleren Permanentmagnete oder einer Erhöhung der Polzahl.

Im folgenden werden zwei Ausführungsbeispiele der Erfindung anhand der Zeichnung erläutert. Es zeigen:

Fig.1 einen Ausschnitt aus einem horizontalen Teilschnitt durch eine Fahrzeugbremse in Aufsicht, mit je einem drehbaren Permanentmagneten in Ein- und in Aus-Schaltstellung,

Fig.2 wie in Fig.1, jedoch ohne innere feststehende Permanentmagnete und innere Rückschlussteile.

Der grundsätzliche Aufbau von Wirbelstrombremsen ist bekannt, beispielsweise aus der eingangs erwähnten EP-Patentanmeldung oder aus DE-A-2 931 539 und DE-A-2 937 968. Die in den Figuren dargestellten Ausschnitte und die anschliessende Beschreibung beschränkt sich deshalb auf die Erläuterung des erfindungsgemässen schaltbaren Permanentmagnetsystems.

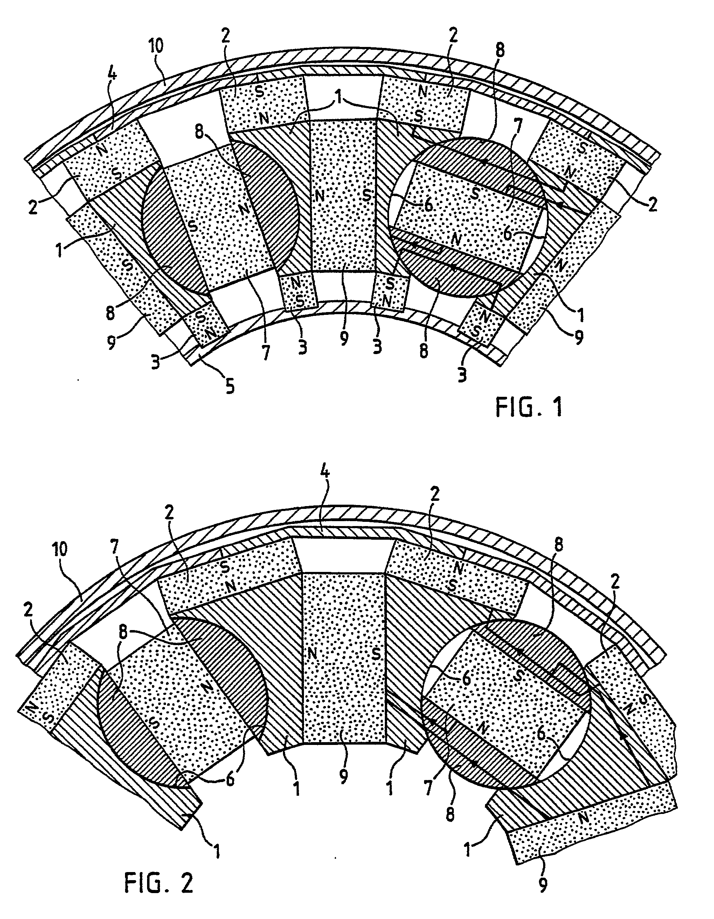

In Fig.1 enthält die ringförmig angeordnete Fahrzeugbremse Polstücke 1, angeordnet zwischen zwei feststehenden Permanentmagneten 2 und 3, die ihrerseits je an Rückschlussteile 4 und 5 anliegen. Die Polstücke 1 weisen eine segmentförmige Aussparung 6 auf, in die entsprechend ausgebildete und an verdrehbaren Permanentmagneten 7 befestigte Polschuhe 8 eingreifen. Wie an sich bekannt, sind die verdrehbaren Permanentmagnete 7 quer zur Drehachse, die senkrecht zur Wirk- bzw. Bremsfläche stehen, magnetisiert. Die an den beiden Polflächen angebrachten Polschuhe 8 sind im eingeschalteten Zustand je durch einen Luftspalt getrennt in der segmentförmigen Aussparung 6 von zwei benachchbarten Polstücken 1 angeordnet. Erfindungsgemäss weist dieses Polstück 1 nur eine segmentförmige Aussparung 6 auf und alternierend mit den verdrehbaren Permanentmagneten 7 sind zusätzlich feststehende Perma nentmagnete 9 zwischen zwei benachbarten Polstücken 1 bzw. mit ihren Polflächen an diesen anliegend angeordnet. Zur Erläuterung der Polaritäten und der Magnetflussrichtungen sind die beiden verdrehbaren Permanentmagnete 7 in verschiedenen Schaltzuständen dargestellt. In Wirklichkeit werden sie gleichgerichtet und synchron miteinander verdreht. Im dargestellten eingeschalteten Zustand auf der linken Hälfte der Fig.1 weisen alle um ein wirksames Poleisen, bestehend aus je einem Polstück 1 und einem eingreifenden Polschuh 8, angeordneten Permanentmagnete 2,3,9 und 7 die gleiche Polarität auf, wodurch auch die Polarität in den Polstücken 1 und den Polschuhen 8 bestimmt ist. Ein Nordpol ist mit einem N und ein Südpol mit einem S bezeichnet. Der Magnetfluss verläuft in diesen wirksamen Poleisen senkrecht zur Zeichnungsebene und in den nicht dargestellten Wirbelstrombremsscheiben parallel zur Zeichnungsebene vom Nordpol zum Südpol. Auf der echten Hälfte der Figur 1 sind die Magnetflussrichtungen im ausgeschalteten Zustand des Permanentmagnetsystemes durch entsprechende Richtungspfeile in der Nord/Südrichtung dargestellt. Bei den feststehenden Permanentmagneten 2 und 3, welche mit ihrer einen Polfläche an einer Seitenfläche der Polstücke 1 und mit ihrer anderen Polfläche an Rückschlussteilen 4 und 5 anliegen, schliesst sich der Magnetflusskreis über diese Rückschlussteile 4 und 5. Der Magnetfluss der verdrehbaren und feststehenden Permanentmagnete 7 und 9 verläuft hingegen entsprechend der eingezeichneten mittleren Pfeilrichtung über den ganzen Kreisring, welcher gebildet wird aus den alternierend in Serie geschalteten Permanentmagneten 7 und 9 und den damit zusammenwirkenden Polstücken 1 und Polschuhen 8. Die Befestigung des schaltbaren Permanentmagnetsystems in einem Gehäuse 10 und die Verdrehung der verdrehbaren Teile erfolgt in an sich bekannter Art und ist hier nicht näher dargestellt.

Das in Fig.2 dargestellte schaltbare Permanentmagnetsystem entspricht an sich demjenigen der Fig.1. Die gleichartigen Teile sind daher mit den gleichen Bezugsziffern versehen. Der Unterschied besteht darin, dass die feststehenden Permanentmagnete 3 und die dazugehörigen inneren Rückschlussteile 5, siehe Fig.1, weggelassen sind. Die Wirkungsweise entspricht ebenfalls derjenigen der Fig.1 mit Ausnahme des Magnetflusses im ausgeschalteten Zustand, welcher auf der Innenseite des Kreisringes zum Teil auch direkt zwischen den feststehenden Permanentmagneten 9 über das Poleisen verlaufen kann. Die zusätzlich feststehenden Permanentmagnete 9 weisen beispielsweise eine grössere Querschnittsfläche auf als die verdrehbaren Permanentmagnete 7, bedingt durch den Wegfall der feststehenden Permanentmagnete 3 gemäss Fig.1. Allerdings umgeben nun die Permanentmagnete 2,7 und 9 im eingeschalteten Zustand gemäss der linken Hälfte der Fig.2 die wirksamen Poleisen, bestehend aus den Polstücken 1 und den zugedrehten Polschuhen 8, nicht mehr vollumfänglich im Querschnitt. Mögliche Streuflüsse sind jedoch vernachlässigbar.

Das stufenlose Regulieren des magnetischen Flusses und damit bei einer Wirbelstrombremse der Bremsleistung von Leerlauf bis Vollast erfolgt durch gleichzeitige Verdrehung aller verdrehbaren Permanentmagnete 7 um z.B. 90°. Je nach Dimensionierung kann aber der dazu benötigte Verdrehwinkel weniger als 90° betragen.

Gegenüber den bisher bekannten schaltbaren Permanentmagnetsystemen ermöglicht das erfindungsgemässe System eine Erhöhung der Polzahl, Vergrösserung des Magnetvolumens und Reduktion der verdrehbaren Teile. Auf eine Wirbelstrombremse bezogen resultiert daraus eine Erhöhung der Leistung und eine Reduktion des Gewichtes. Die Gewichtsreduktion ist gegeben durch das nun vergrösserte Verhältnis von Magnetvolumen zu Eisenvolumen unter Berücksichtigung der spezifischen Gewichte von 4,9 für magnetisches Material zu 7,81 für Eisen.

## Patentansprüche

1. Schaltbares Permanentmagnetsystem, insbesondere für eine Fahrzeugbremse, mit Polstücken (1) wechselnder Polarität, an denen feststehende und verdrehbare Permanentmagnete (2,3 und 7) angrenzen, wobei feststehende Permanentmagnete (2) mit ihrem einen Pol an einer Seitenfläche der Polstücke (1) und mit ihrem anderen Pol an Rückschlussteilen (4) anliegen und die verdrehbaren Permanentmagnete (7) quer zur Drehachse, die senkrecht zur Wirkfläche stehen, magnetisiert sind und auf ihren Polflächen mit segmentförmigen Polschuhen (8) versehen sind, die in eine gegenüberliegende segmentförmige Aussparung (6) der Polstücke (1) eingreifen, dadurch gekennzeichnet, dass alternierend mit den verdrehbaren Permanentmagneten (7) zusätzlich feststehende Permanentmagnete (9) vorgesehen sind, welche je mit der gleichpoligen Polfläche an zwei benachbarten Polstücken (1) wechselnder Polarität anliegen und dabei im eingeschalteten Vollast-Zustand zusammen mit den seitlich anliegenden und den verdrehbaren Permanentmagneten (2 und 7) mit jeweils gleicher Polarität Polstücke (1) und angrenzende Polschuhe (8) im Querschnitt gesehen mindestens grösstenteils umgeben.

2. Schaltbares Permanentmagnetsystem nach Anspruch 1, dadurch gekennzeichnet, dass an beiden Seitenflächen der Polstücke (1) feststehende Permanentmagnete (2,3) vorgesehen sind.

3. Schaltbares Permanentmagnetsystem nach Anspruch 1, dadurch gekennzeichnet, dass nur an der äusseren Seitenfläche der Polstücke (1) feststehende Permanentmagnete (2) vorgesehen sind.

## Claims

1. Commutable permanent-magnet system, in particular for a vehicle brake, with pole pieces (1) of alternating polarity, contiguous with which are fixed and rotatable permanent magnets (2, 3 and 7), fixed permanent magnets (2) abutting with one pole against a lateral face of the pole pieces (1) and with their other pole against return parts (4), and the rotatable permanent magnets (7) transverse to the axis of rotation, which are perpendicular to the operative surface, being magnetised and on their pole faces provided with segment-shaped pole shoes (8) which engage in an opposing segment-shaped recess (6) of the pole pieces (1), characterised in that alternately with the rotatable permanent magnets (7) there are in addition provided fixed permanent magnets (9) which each abut by the unipolar pole face against two neighbouring pole pieces (1) of alternating polarity and in the full load condition, with the current flowing, together with the laterally abutting and the rotatable permanent magnets (2 and 7) each with the same polarity, at least predominately, when viewed in cross-section, enclose pole pieces (1) and adjoining pole shoes (8).

2. Commutable permanent-magnet system according to claim 1, characterised in that fixed permanent magnets (2, 3) are provided on both lateral faces of the pole pieces (1).

3. Commutable permanent-magnet system according to claim 1, characterised in that fixed permanent magnets (2) are only provided on the outer lateral face of the pole pieces (1).

## Revendications

1. Système commutable d'aimants permanents, en particulier pour le frein d'un véhicule, avec des pièces polaires (1) de polarités alternées, auquel sont adjacents des aimants permanents fixes et des aimants permanents susceptibles de tourner (2, 3 et 7), les aimants permanents fixes (2) s'appliquant par un de leur pôle contre une surface latérale des pièces polaires (1) et par leur autre pôle contre des parties de fermeture (4) du circuit magnétique, et les aimants permanents susceptibles de tourner (7) étant magnétisés transversalement par rapport à leurs axes de rotation qui sont perpendiculaires à la surface utile, et étant munis sur leurs surfaces polaires de pièces polaires en forme de segments (8) qui viennent en prise dans un évidement en forme de segment (6) des pièces polaires (1) placées en face, système caractérisé en ce qu'il est en outre prévu, en alternance avec les aimants permanents susceptibles de tourner (7), des aimants permanents fixes (9), lesquels s'appliquent chacun avec les surfaces polaires de même polarité contre deux pièces polaires voisines (1) de polarités alternées, et lorsque l'état de pleine charge est enclenché entourent alors, au moins en majeure partie, en corrélation avec les aimants permanents s'appliquant latéralement et les aimants permanents susceptibles de tourner (2 et 7) avec respectivement la même polarité, les pièces polaires (1) et les pièces polaires (8) adjacentes, vues en section transversale.

2. Système commutable d'aimants permanents selon la revendication 1, caractérisé en ce qu'il est prévu sur deux surfaces latérales des pièces polaires (1) des aimants permanents fixes (2, 3).

3. Système commutable d'aimants permanents selon la revendication 1, caractérisé en ce qu'il est prévu uniquement sur les surfaces latérales externes des pièces polaires (1), des aimants permanents fixes (2).

10
4
2
2
8
1
7
8
N
S
S
N
S
N
N
S
S
6
N
S
N
6
2
2
1
S
S
N
N
S
S
N
N
N
S
1
8
9
S
N
3
5
7
3
9
3
8
N
S
3
9

FIG. 1

4
2
2
10
2
7
8
8
S
N
N
S
N
S
8
2
N
S
N
S
6
S
S
N
N
S
6
6
N
1
9
1
7
8
1
1
N
9

FIG. 2